(19) Europäisches Patentamt
European Patent Office
Office européen des brevets

(11) Veröffentlichungsnummer: **0 322 509 B1**

(12) **EUROPÄISCHE PATENTSCHRIFT**

(45) Veröffentlichungstag der Patentschrift:
25.09.91 Patentblatt 91/39

(51) Int. Cl.⁵: **F16H 19/06, B23Q 1/20**

(21) Anmeldenummer: 88113670.9

(22) Anmeldetag: 23.08.88

(54) **Mechanische Lineareinheit.**

(30) Priorität: 02.12.87 DE 8715922 U

(43) Veröffentlichungstag der Anmeldung:
05.07.89 Patentblatt 89/27

(45) Bekanntmachung des Hinweises auf die
Patenterteilung:
25.09.91 Patentblatt 91/39

(84) Benannte Vertragsstaaten:
AT CH DE FR GB IT LI NL SE

(56) Entgegenhaltungen:
EP-A- 0 033 541

(56) Entgegenhaltungen:
DE-A- 3 205 143
DE-A- 3 333 795
DE-B- 2 047 092
US-A- 4 706 510

(73) Patentinhaber: NEFF GMBH
Bonholzstrasse 17
W-7035 Waldenbuch (DE)

(72) Erfinder: Der Erfinder hat auf seine Nennung
verzichtet

(74) Vertreter: Rüger, Rudolf, Dr.-Ing. et al
Patentanwälte Dr.-Ing. R. Rüger Dipl.-Ing. H.P.
Barthelt Webergasse 3 Postfach 348
W-7300 Esslingen/Neckar (DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine mechanische Lineareinheit zur Erzeugung einer begrenzten Linearbewegung eines angetriebenen Kraftübertragungselementes, das auf einem einen Längsschlitz aufweisenden, länglichen Gehäuse in Gestalt eines formstabilen Profilrohres längsgeführt ist, mit einer dem Gehäuse zugeordneten Antriebseinrichtung, die mit dem Kraftübertragungselement im Inneren des Gehäuses über ein durch den Längsschlitz in das Gehäuseinnere ragendes Teil gekuppelt ist.

Beispielsweise aus der DE-A1-3205143 ist eine mechanische Lineareinheit dieser Art bekannt, bei der auf der Außenseite des das längliche Gehäuse bildenden formstabilen Profilrohres in der Nähe des Längsschlitzes zwei Führungsbahnen angeordnet sind, auf denen ein bügelartiges Führungsteil längsgeführt ist, das mit dem Kraftübertragungselement verbunden ist. Die Antriebseinrichtung ist hierbei durch einen Spindeltrieb gebildet, dessen Gewindespindel im Gehäuseinneren verlaufend angeordnet und endseitig in das Gehäuse verschließenden Lagerflanschen drehbar gelagert ist. Die Kupplung mit dem Kraftübertragungselement erfolgt durch eine Spindelmutter.

Die Führungsbahnen liegen bei dieser Lineareinheit nach außen zu frei, was unter bestimmten Einsatzbedingungen unzweckmäßig ist. Außerdem gibt es Anwendungsfälle, bei denen es auf eine besondere Leichtgängigkeit des Kraftübertragungselementes bei seiner Linearbewegung relativ zu dem Gehäuse ankommt. Dieser sind aber bei einer Schiebeführung vorgegebener Genauigkeit Grenzen gesetzt.

Bei einer aus der DE-A1-3333795 bekannten wälzkörpergelagerten Längsführung mit Schlitten sind auf einem starren Bett zwei im Abstand zueinander angeordnete, parallele Führungsleisten aufgeschraubt, auf denen zwei Gleitsteine von im wesentlichen C-förmiger Querschnittsgestalt jeweils mittels zweier Wälzlager längsverschieblich gelagert sind. Die beiden Gleitschienen tragen einen Schlitten, mit dem sie verschraubt sind. Die beiden Führungsschienen tragen auf ihrer Außenseite jeweils auch eine freiliegende Führungsbahn in Gestalt einer Wälzkörperlaufbahn. Bei einer aus der US-A-4706510 bekannten Längsführung sind die beiden parallelen Führungsleisten ebenfalls auf einem starren Maschinenteil, bspw. in Gestalt eines geschlossenen Hohlträgers angeordnet, während der längsgeführte Schlitten oder dergl. parallele Lagerschienen trägt, die über Wälzlager an den Führungsschienen längsbeweglich gelagert sind. Abhängig von der Ausführungsform können die Lagerschienen auf der Innen- oder der Außenseite der Führungsschienen verlaufend angeordnet sein, womit auch die Wälzkörperlaufbahnen entsprechend auf der Innen- oder Außenseite der Führungsschienen vorgesehen sind.

Aufgabe der Erfindung ist es demgegenüber, eine mechanische Lineareinheit von einfachem, robustem Aufbau zu schaffen, deren Kraftübertragungselement sich auch bei hoher Belastung durch reibungsarme Leichtgängigkeit auszeichnet und das es außerdem gestattet, erforderlichenfalls die Führungsbahnen für das Kraftübertragungselement ohne großen Aufwand nach außen hin abzudecken.

Zur Lösung dieser Aufgabe ist die eingangs genannte Lineareinheit erfindungsgemäß durch die Merkmale des Patentanspruchs 1 gekennzeichnet.

Die linearen Wälzlager gewährleisten zum einen eine exakte und zum anderen eine reibungsarme Führung und Lagerung des Kraftübertragungselementes. Da dieses im Bereiche der den Längsschlitz begrenzenden, sich von der Außenumfangsfläche in das Gehäuseinnere erstreckenden Begrenzungsflächen des Längsschlitzes geführt ist, braucht lediglich der Längsschlitz abgedeckt oder verschlossen zu werden, um erforderlichenfalls die Wälzkörperlaufbahnen gegen äußere Beeinträchtigungen zu schützen.

Grundsätzlich können die beiden den Längsschlitz begrenzenden Gehäusewände parallel zueinander ausgerichtet sein, doch hat es sich als besonders vorteilhaft erwiesen, wenn diese beiden Gehäusewände zum Gehäuseinneren aufeinander zulaufend geneigt angeordnet sind. Damit werden die Krafteinleitungsverhältnisse in das Gehäuse verbessert, während gleichzeitig die Montagefreundlichkeit erhöht wird.

Da die Wälzkörperlaufbahnen auf Lagerleisten angeordnet sind, die an den beiden Gehäusewänden mit dem Gehäuse verbunden sind, können diese Lagerleisten, die bspw. aus gehärtetem Stahl bestehen, als getrennte Teile engtoleriert mit geringem Aufwand hergestellt werden, während für das Gehäuse im Hinblick auf andere Eigenschaften zweckmäßiges Material, bspw. Aluminium, gewählt werden kann.

Eine besonders zweckmäßige Ausführungsform ist dadurch gekennzeichnet, daß das Kraftübertragungselement wenigstens ein nach Art des Schlittens eines Linearlagers ausgebildetes Element aufweist, das an dem in den Längsschlitz ragenden Teil wenigstens zwei mit entsprechenden Kugellaufbahnen im Bereiche der Gehäuseseitenwände zusammenwirkende Kugellaufbahnen trägt, an die sich an dem Schlitten angeordnete oder ausgebildete Kugelumlenk- und -rückführkanäle für zugeordnete Kugelreihen anschließen. Dabei kann der Schlitten durch die auf den Kugellaufbahnen laufenden Kugeln unverlierbar an dem Gehäuse gehalten sein.

Falls die Einsatzbedingungen einen Schutz der Führungsbahnen gegen äußere Einflüsse erforderlich machen, kann die Anordnung derart getroffen sein, daß der Längsschlitz beiderseits des Kraftübertragungselementes durch ein im Bereiche des Längsschlitzes lösbar verrastetes elastisches Verschlußband verschlos-

EP 0 322 509 B1

sen ist, das durch das Kraftübertragungselement hindurch oder über dieses hinweg geleitet ist. Einfache konstruktive Verhältnisse ergeben sich dabei, wenn das Verschlußband über den Schlitten hinweggeführt und nach außen zu durch eine mit dem Schlitten verbundene Abdeckung abgedeckt ist.

Wenn die Lineareinheit für höhere Belastungen eingesetzt werden soll, ist es vorteilhaft, wenn das Gehäuse als ein doppelwandiges Profilrohr ausgebildet ist, dessen Wände gegeneinander verrippt sind.

Die Antriebseinrichtung für das Kraftübertragungselement kann an sich bekannter Art sein. Als Beispiele hierfür kommen ein Spindeltrieb, ähnlich wie in der DE-A1-3205143 beschrieben, oder auch Zugmittelantriebe infrage. Der Antrieb kann auch über einen mit dem Kraftübertragungselement verbundenen und in dem dann als Zylinder ausgebildeten Profilrohr verschieblichen Kolben erfolgen, der mit einem Fluid beaufschlagt ist. In diesem Falle ist der Längsschlitz beidseitig des Kolbens nach außen zu in bekannter Weise mittels eines sogenannten Abdeckbandes abgedichtet.

Als besonders zweckmäßig hat sich eine Anordnung erwiesen, bei der die Antriebseinrichtung ein durch das Gehäuseinnere verlaufendes und mit dem Kraftübertragungselement verbundenes endloses Zugmittel aufweist, das über endseitig an das Gehäuse angesetzte, Umlenkrollen enthaltene Umlenkeinheiten geführt ist, von denen wenigstens eine eine Antriebsvorrichtung für ihre Umlenkrolle aufweist.

In der Zeichnung sind Ausführungsbeispiele des Gegenstandes der Erfindung dargestellt. Es zeigen :

Fig. 1    eine mechanische Lineareinheit gemäß der Erfindung, in der Draufsicht, mit längs der Linien I-I der Fig. 2 geschnittenen Umlenkeinheiten,
Fig. 2    die Lineareinheit nach Fig. 1, geschnitten längs der Linie II-II der Fig. 1, in einer Seitenansicht,
Fig. 3    die Lineareinheit nach Fig. 1, geschnitten längs der Linie III-III der Fig.2, in einer Seitenansicht, und
Fig. 4    die Lineareinheit nach Fig. 1, geschnitten längs der Linie IV-IV der Fig. 2, in einer Seitenansicht.

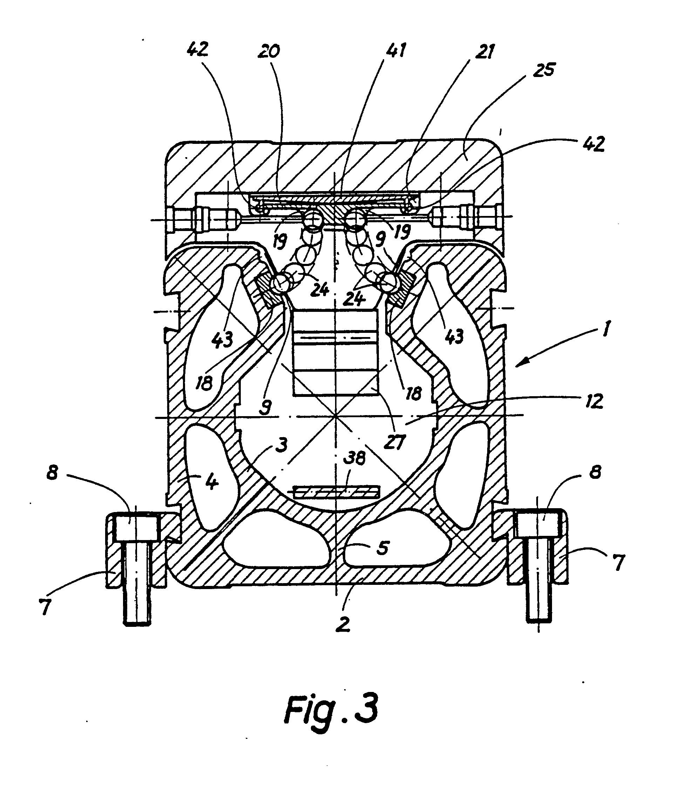

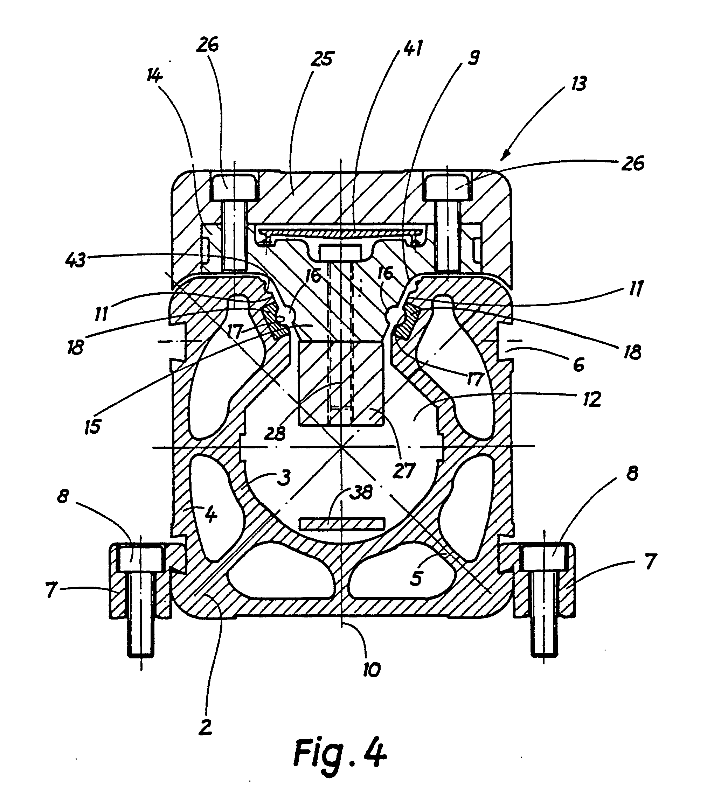

Die mechanische Lineareinheit weist ein längliches Gehäuse 1 in Gestalt eines formstabilen, vorzugsweise aus Leichtmetall bestehenden Profilrohres 2 auf, dessen äußerer Umriß im Querschnitt im wesentlichen quadratisch ist. Das Profilrohr 2 ist doppelwandig ausgebildet ; seine innenliegende, im wesentlichen zylindrische Innenwand 3 ist mit der geradlinig begrenzten Außenwand 4 durch etwa radial verlaufende Gehäuserippen 5 verbunden, so daß sich ein insgesamt verripptes zweischaliges Gebilde ergibt. Das Profilrohr 2 ist im Strangpreßverfahren hergestellt und auf seiner Außenseite mit angeformten Schwalbenschwanznuten 6 versehen, in die in der bspw. aus den Fig. 3, 4 ersichtlichen Weise Befestigungspratzen 7 eingreifen können, die es gestatten, das Profilrohr 2 mittels durchgesteckter Schraubenbolzen 8 auf einer Unterlage lagegenau zu fixieren.

Im Bereiche einer seiner Seitenwände ist das Profilrohr 2 mit einem durchgehenden Längsschlitz 9 versehen, der symmetrisch zu der in Fig. 4 bei 10 angedeuteten Längsmittelebene verläuft und beidseitig durch zwei Gehäusewände 11 begrenzt ist, die die beiden Wände 3,4 miteinander verbinden. Die einander gegenüberliegenden beiden Gehäusewände 11 sind schräg zueinander zu dem mit 12 bezeichneten Gehäuseinneren hin zusammenlaufend angeordnet ; sie sind im wesentlichen eben und schließen einen Winkel von ca. 45° miteinander ein. Alternativ könnten sie auch parallel zueinander ausgerichtet sein.

An dem Gehäuse 1 ist ein Kraftübertragungselement 13 längsverschieblich geführt und gelagert. Das im wesentlichen rechteckige Kraftübertragungselement 13 weist zwei nach Art des Schlittens eines Linearlagers ausgebildete schlittenförmige Elemente 14 von im wesentlichen T-förmiger Querschnittsgestalt auf, die mit einem im Querschnitt etwa trapezförmigen Teil 15 in den Längsschlitz 9 des Profilrohres 2 ragen. Die Seitenwände des trapezförmigen Teiles 15 verlaufen im Abstand etwa parallel zu den benachbarten Gehäuseseitenwänden 11 und tragen jeweils eine längsverlaufende Kugellaufbahn 16, der eine entsprechende geradlinige Kugellaufbahn 7 im Bereiche jeder der beiden Gehäusewände 11 zugeordnet ist.

Die Kugellaufbahnen 17 sind in aus gehärtetem Stahl bestehenden geschliffenen Lagerleisten 18 ausgebildet, welche in entsprechende Nuten der Gehäusewände 11 eingesetzt sind.

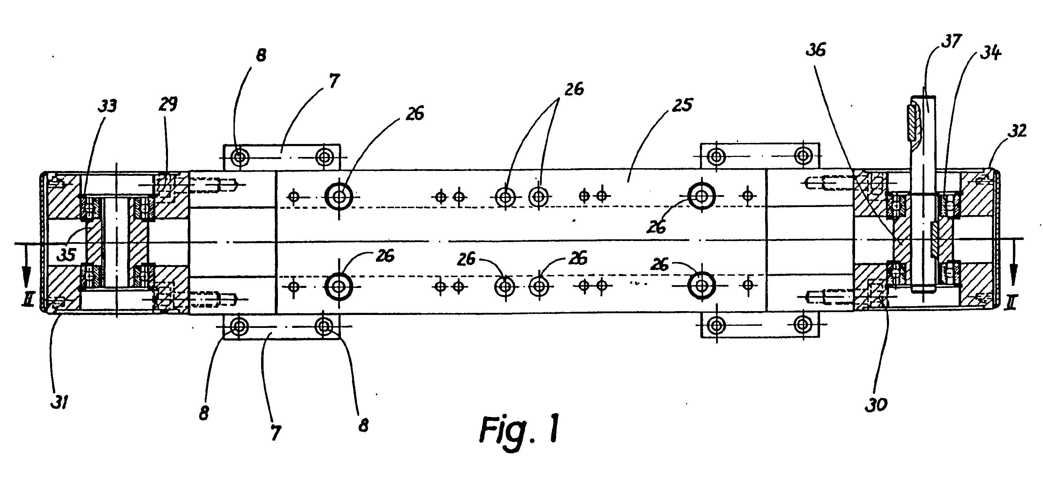

Wie insbesondere aus Fig. 1,3 zu ersehen, sind in jedem der schlittenartigen Elemente 14 zwei obenliegende, über die Länge durchgehende Kugelrückführungskanäle 19 ausgebildet, die nach oben zu durch ein aus Kunststoffmaterial bestehendes Abdeck- und Führungsteil 20 abgeschlossen sind, welches in einer die Kugelrückführungskanäle 19 aufnehmenden Vertiefung an der Oberseite des schlittenartigen Elementes 14 verrastet ist.

Beidseitig der beiden Kugelrückführungskanäle 19 sind an die schlittenartigen Elemente 14 jeweils zwei Kugelumlenkelemente 22 angesetzt, die jeweils einen im wesentlichen haarnadelförmigen Kugelumlenkkanal 23 begrenzen, der den zugeordneten Kugelrückführungskanal 19 mit den entsprechenden Kugellaufbahnen 16, 17 verbindet.

Auf den rillenförmigen Kugellaufbahnen 16, 17 läuft jeweils eine Kugelreihe 24 (Fig. 3), deren unbelastete Kugeln in der bei Linearlagern üblichen Weise durch die zugeordneten Kugelumlenkkanäle 23 und den zugehörigen Kugelrückführungskanal 19 umlaufend geführt sind. Durch die rillenförmige Gestaltung der Kugellauf-

3

bahnen 16, 17 und die entsprechende Ausbildung der Lagerungsverhältnisse ist erreicht, daß das Kraftübertragungselement 13 durch die Kugelscharen 24 unverlierbar, aber längsverschieblich, an dem Gehäuse 1 gelagert ist.

Die beiden schlittenartigen Elemente 14 sind im axialen Abstand starr miteinander verbunden.

Mit ihnen ist eine im Querschnitt im wesentlichen U-förmige massive Abdeckplatte 25 mittels Schraubenbolzen 26 verschraubt, die auf die schlittenartigen Elemente diese umgreifend aufgesetzt ist. Auf der gegenüberliegenden Seite ist an das Kraftübertragungselement 13 ein im wesentlichen T-förmiges Kupplungselement 27 mittels Schraubenbolzen 28 angeschraubt, das in dem Gehäuseinnenraum 12 liegt und zur Kupplung des Kraftübertragungselementes 13 mit einer Antriebseinrichtung dient.

An das Profilrohr 2 sind stirnseitig bei 29, 30 zwei Umlenkeinheiten 31, 32 angeflanscht, die im wesentlichen die gleiche Umrißgestalt wie das Profilrohr 2 aufweisen und jeweils im wesentlichen gehäuseartig ausgebildet sind. In jeder der beiden Umlenkeinheiten 31, 32 ist über Kugellager 33, 34 eine Umlenkrolle 35, 36 drehbar gelagert. Die beiden Umlenkrollen 35, 36 sind achsparallel ; in die Umlenkrolle 36 ist drehfest eine eine Antriebsvorrichtung bildende Antriebswelle 37 eingesetzt, die mit einem nicht weiter dargestellten Antriebsmotor, bspw. einem angeflanschten Elektromotor, gekuppelt werden kann. Über die beiden Antriebsrollen 35,36 ist ein endloses Band 38 geführt, das mit seinen beiden Trume in dem Gehäuseinnenraum 12 verläuft und das an seinen beiden Enden über Klemmplatten 39 und Klemmschrauben 40 mit dem Kupplungselement 27 fest verbunden ist.

Eine Verdrehung der Welle 37 bewirkt somit eine Hin- und Herbewegung des Kraftübertragungselementes 13 längs des Gehäuses 1.

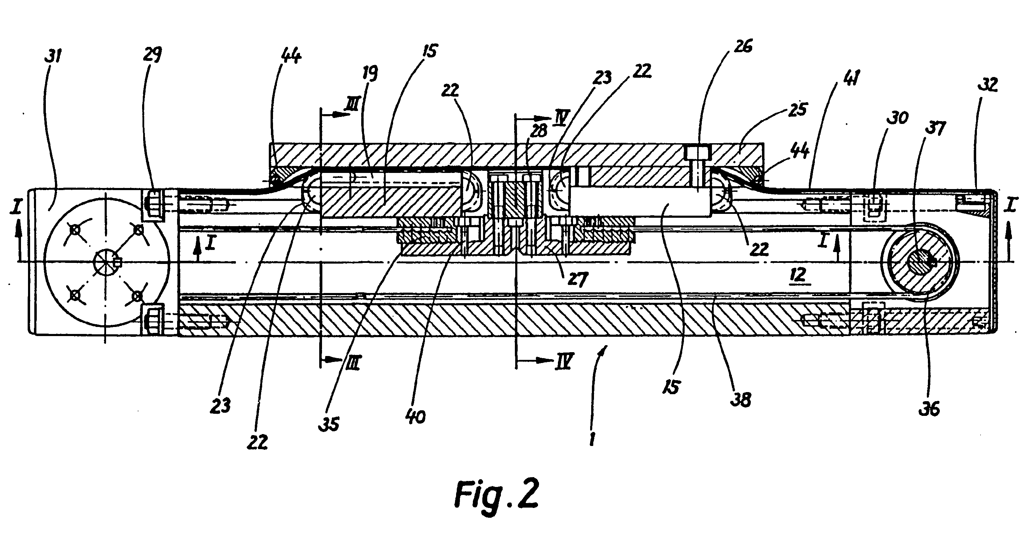

Beidseitig des Kraftübertragungselementes ist der Längsschlitz 9 durch ein aus Kunststoffmaterial bestehendes elastisches Verschlußband 41 verschlossen, das, wie aus den Fig. 3,4 zu ersehen, eine im wesentlichen U-förmige Querschnittsgestalt mit seitlich angeformten Halteflanschen 42 aufweist, mit denen es in längsverlaufenden rillenartigen Vertiefungen der beiden Gehäusewände 11 lösbar verrastet ist. Das Verschlußband 41 ist zwischen der Abdeckplatte 25 und dem Boden der Vertiefung 21 der schlittenartigen Elemente 14 hindurchgeführt, wie dies im einzelnen bspw. Fig. 2 zu entnehmen ist. An der Abdeckplatte 25 endseitig angeordnete, auf die Oberseite des Verschlußbandes 41 einwirkende Bandführungsrollen 44 drücken das Verschlußband 41 bei einer Längsbewegung des Kraftübertragungselementes 13 bezüglich des Profilrohres 2 jeweils in den Längsschlitz 9, so daß der Längsschlitz 9 beidseitig des Kraftübertragungselementes 13 immer sicher verschlossen ist. Damit sind auch die Kugellaufbahnen 17, ebenso wie der Gehäuseinnenraum 12, nach außen zu sicher abgedeckt. Das Verschlußband 41 ist an seinen beiden Enden an den Umlenkeinheiten 31, 32 fixiert.

## Patentansprüche

1. Mechanische Lineareinheit zur Erzeugung einer begrenzten Linearbewegung eines angetriebenen Kraftübertragungselementes (13), das auf einem einen Längsschlitz (9) aufweisenden länglichen Gehäuse (1) in Gestalt eines formstabilen Profilrohres (2) längsgeführt ist, mit einer dem Gehäuse zugeordneten Antriebseinrichtung, die mit dem Kraftübertragungselement im Inneren des Gehäuses über ein durch den Längsschlitz in das Gehäuseinnere ragendes Teil (15) gekuppelt ist, dadurch gekennzeichnet, daß das Kraftübertragungselement (13) an dem Gehäuse (1) im Bereiche der den Längsschlitz (9) begrenzenden, einander gegenüberliegenden beiden längsverlaufenden Gehäusewände (11) mittels linearer Wälzlager (16, 17, 24) gelagert und geführt ist, deren Wälzkörperlaufbahnen (16, 17) an dem in den Längsschlitz ragenden Teil (15) des Kraftübertragungselementes und auf den beiden den Längsschlitz begrenzenden Gehäusewänden (11) angeordnet sind, und daß die Wälzkörperlaufbahnen (17) der Gehäusewände auf Lagerleisten (18) angeordnet sind, die an den beiden Gehäusewänden mit dem Gehäuse (1) verbunden sind.

2. Lineareinheit nach Anspruch 1, dadurch gekennzeichnet, daß die beiden Gehäusewände (11) zum Gehäuseinnern (12) aufeinander zulaufend geneigt angeordnet sind.

3. Lineareinheit nach Anspruch 1, dadurch gekennzeichnet, daß die beiden Gehäusewände (11) parallel zueinander ausgerichtet sind.

4. Lineareinheit nach einem der vorhergehenden Ansprüche, dadurch gekennzeichnet, daß das Kraftübertragungselement (13) wenigstens ein nach Art des Schlittens eines Linearlagers ausgebildetes Element (14) aufweist, das an dem in den Längsschlitz (9) ragenden Teil (15) wenigstens zwei mit entsprechenden Kugellaufbahnen (17) im Bereiche der Gehäusewände (11) zusammenwirkende Kugellaufbahnen (16) trägt, an die sich an dem schlittenartigen Element (14) angeordnete oder ausgebildete Kugelumlenk- und -rückführkanäle (19, 23) anschließen.

5. Lineareinheit nach Anspruch 4, dadurch gekennzeichnet, daß das schlittenartige Element (14) durch die

4

auf den Kugellaufbahnen (16, 17) laufenden Kugeln (24) unverlierbar an dem Gehäuse (1) gehalten ist.

6. Lineareinheit nach einem der vorhergehenden Ansprüche, dadurch gekennzeichnet, daß der Längsschlitz (9) beidseitig des Kraftübertragungselementes (13) durch ein im Bereiche des Längsschlitzes (9) lösbar verrastetes elastisches Verschlußband (41) verschlossen ist, das durch das Kraftübertragungselement (13) hindurch oder über dieses hinweggeleitet ist.

7. Lineareinheit nach den Ansprüchen 4 oder 5 sowie 6, dadurch gekennzeichnet, daß das Verschlußband (41) über das schlittenartige Element (14) hinweggeführt und nach außen zu durch eine mit dem schlittenartigen Element (14) verbundene Abdeckung (25) abgedeckt ist.

8. Lineareinheit nach einem der vorhergehenden Ansprüche, dadurch gekennzeichnet, daß das Gehäuse (1) als ein doppelwandiges Profilrohr (2) ausgebildet ist, dessen Wände (3,4) gegeneinander verrippt sind.

9. Lineareinheit nach einem der vorhergehenden Ansprüche, dadurch gekennzeichnet, daß die Antriebseinrichtung ein durch das Gehäuseinnere (12) verlaufendes und mit dem Kraftübertragungselement (13) verbundenes endloses Zugmittel (38) aufweist, das durch endseitig an das Gehäuse (1) angesetzte, Umlenkrollen (35, 36) aufweisende Umlenkeinheiten (31, 32) geführt ist, von denen wenigstens eine eine Antriebsvorrichtung (37) für ihre Umlenkrolle (36) aufweist.

## Claims

1. A mechanical linear unit for generating a limited linear movement of a driven force-transmitting element (13) which is longitudinally guided on an elongate casing (1) in the shape of a dimensionally stable sectional tube (2) formed with a longitudinal slot (9), the unit having a driving device which is associated with the casing and which is coupled to the force-transmitting element in the inside of the casing via a part (15) projecting through the longitudinal slot into the inside of the casing, characterized in that the force-transmitting element (13) is mounted and guided via linear antifriction bearings (16, 17, 24) on the casing (1) in the zone of the two opposite longitudinally extending casing walls (11) bounding the longitudinal slot (9), the rolling body tracks (16,17) being disposed on the part (15) of the force-transmitting element which extends into the longitudinal slot and on the two casing walls (11) bounding the longitudinal slot, and the rolling body tracks (17) of the casing walls are disposed on bearing strips (18) which are connected to the casing (1) on the two casing walls.

2. A linear unit according to claim 1, characterized in that the two casing walls (11) are disposed converging at an inclination in the direction of the inside (12) of the casing.

3. A linear unit according to claim 1, characterized in that the two casing walls (11) are aligned parallel with one another.

4. A linear unit according to one of the preceding claims, characterized in that the force-transmitting element (13) has at least one element (14) which is constructed after the fashion of a carriage of a linear bearing and which bears on the part (15) extending into the longitudinal slot (9) at least two ball bearing tracks (16) which cooperate with matching ball bearing tracks (17) in the zone of the casing walls (11) and which are adjoined by ball reversal and return channels (19, 23) disposed or constructed on the carriage-like element (14).

5. A linear unit according to claim 4, characterized in that the carriage-like element (14) is retained non-releasably on the casing (1) by the balls (24) running on the ball tracks (16, 17).

6. A linear unit according to one of the preceding claims, characterized in that the longitudinal slot (9) is closed on both sides of the force-transmitting element (13) by a resilient closure band (41) which is releasably latched in the zone of the longitudinal slot (9) and which extends through or over the force-transmitting element (13).

7. A linear unit according to claims 4 or 5 and 6, characterized in that the closure band (41) extends over the carriage-like element (14) and is covered in the outward direction by a cover (25) connected to the carriage-like element (14).

8. A linear unit according to one of the preceding claims, characterized in that the casing (1) takes the form of a double-walled sectional tube (2) whose walls (3, 4) are interconnected via ribs.

9. A linear unit according to one of the preceding claims, characterized in that the driving device has an endless traction means (38) which extends through the inside (12) of the casing and which is connected to the force-transmitting element (13) and which is guided by deflecting units (31, 32) having deflecting rollers (35, 36) attached to the casing (1) at the ends, at least one of the deflecting units having a driving device (37) for its deflecting roller (36).

EP 0 322 509 B1

## Revendications

1. Dispositif de commande linéaire mécanique destiné à produire un mouvement linéaire limité d'un élément de mécanisme de transmission (13) entraîné, qui est guidé en translation sur un corps (1) allongé muni d'une fente longitudinale (9) et se présentant sous la forme d'un tube profilé (2) indéformable, comportant un dispositif d'entraînement associé au corps, qui est couplé à l'élément de mécanisme de transmission à l'intérieur du corps au moyen d'un élément (15) faisant saillie par la fente longitudinale à l'intérieur du corps, caractérisé en ce que l'élément de mécanisme de transmission (13) est guidé et supporté sur le corps dans la zone des deux parois de corps longitudinales, situées face à face, délimitant la fente longitudinale (9), au moyen de roulements linéaires (16, 17, 24), dont les chemins de roulement (16, 17) des corps de roulement sont aménagés sur la partie (15) de l'élément de mécanisme de transmission faisant saillie dans la fente longitudinale et sur les deux parois de corps (11) délimitant la fente longitudinale et en ce que les chemins de roulement (17) des corps de roulement et les parois de corps sont aménagés dans des règles-paliers (18), qui sont fixées sur le corps (1) au niveau des sur les deux parois de corps.

2. Dispositif de commande linéaire mécanique selon la revendication 1, caractérisé en ce que les deux parois de corps (11) sont inclinées en direction l'une de l'autre vers l'intérieur (12) du corps.

3. Dispositif de commande linéaire mécanique selon la revendication 1, caractérisé en ce que les deux parois de corps (11) sont parallèles entre elles.

4. Dispositif de commande linéaire mécanique selon l'une des revendications précédentes, caractérisé en ce que l'élément d'organe de transmission (13) comporte au moins un élément (14) réalisé sous forme de chariot d'un palier linéaire qui porte sur sa partie (15) faisant saillie dans la fente longitudinale (9) au moins deux chemins de roulement de billes (16) coopérant avec des chemins de roulement de billes (17) correspondants dans la zone des parois de corps (11), et auxquels se raccordent des conduits de renvoi et de recirculation de billes (19, 23) sur l'élément (14) en forme de chariot.

5. Dispositif de commande linéaire mécanique selon la revendication 4, caractérisé en ce que l'élément (14) en forme de chariot est tenu de manière imperdable sur le corps (1) par les billes (24) roulant sur les chemins de roulement de billes (16, 17).

6. Dispositif de commande linéaire mécanique selon l'une des revendications précédentes, caractérisé en ce que la fente longitudinale (9) est obturée de part et d'autre de l'élément de mécanisme de transmission (13) au moyen d'une bande de fermeture (41) élastique encliquetée de manière démontable dans la zone de la fente longitudinale (9), et qui passe dans ou au-dessus de l'élément de mécanisme de transmission (13).

7. Dispositif de commande linéaire mécanique selon les revendications 4 ou 5 et 6, caractérisé en ce que la bande de fermeture (41) passe au-dessus de l'élément (14) en forme de chariot et est recouverte vers l'extérieur par une plaque de couverture (25) reliée à l'élément (14) en forme de chariot.

8. Dispositif de commande linéaire mécanique selon l'une des revendications précédentes, caractérisé en ce que le corps (1) est réalisé sous la forme d'un tube profilé (2) à double paroi dont les parois (3, 4) sont reliées entre elles par des nervures.

9. Dispositif de commande linéaire mécanique selon l'une des revendications précédentes, caractérisé en ce que le dispositif d'entraînement présente un moyen de traction (38) sans fin disposé à l'intérieur (12) du corps et relié à l'élément de mécanisme de transmission (13), qui est guidé par des unités de renvoi (31, 32) munies de galets de renvoi (35, 36) montés aux extrémités du corps (1), dont l'une au moins comporte un dispositif d'entraînement (37) de son galet de renvoi (36).

6

Fig. 1

EP 0 322 509 B1

Fig.2

EP 0 322 509 B1

Fig.3

Fig. 4